# FASCICULE DE BREVET EUROPEEN

(11) **EP 3 489 833 B1**
(45) Date de publication et mention de la délivrance du brevet: **25.05.2022**
(21) Numéro de dépôt: 18306569.7
(22) Date de dépôt: 26.11.2018
(51) Int. Cl.: G06F 12/02, G06F 3/06, G06F 8/70

(54) **PROCÉDÉ D'OBTENTION D'UN PROGRAMME DESTINÉ À ÊTRE EXÉCUTÉ PAR UN DISPOSITIF ÉLECTRONIQUE, TEL QU'UNE CARTE À PUCE, COMPRENANT UNE MÉMOIRE NON VOLATILE**
VERFAHREN ZUR ERSTELLUNG EINES PROGRAMMS, DAS FÜR DIE AUSFÜHRUNG DURCH EINE ELEKTRONISCHE VORRICHTUNG BESTIMMT IST, WIE BEISPIELSWEISE EINE CHIP-KARTE, DIE EINEN NICHT-FLÜCHTIGEN SPEICHER UMFASST
METHOD FOR OBTAINING A PROGRAM INTENDED FOR EXECUTION BY AN ELECTRONIC DEVICE, SUCH AS A SMART CARD, COMPRISING A NON-VOLATILE MEMORY

(30) Priorité: 27.11.2017 FR 1761223
(43) Date de publication de la demande: 29.05.2019
(73) Titulaire: Idemia Identity & Security France, 92400 Courbevoie (FR)
(72) Inventeur: OSMAN, Fadi, 92400 Courbevoie (FR); BRUGNON, Marc, 92400 Courbevoie (FR); MAGHREBI, Houssem, 92400 Courbevoie (FR)
(74) Mandataire: Chauvin, Karen Laurence

(56) Documents cités:
- US-A1- 2014 379 971
- JINGTONG HU ET AL: "Software enabled wear-leveling for hybrid PCM main memory on embedded systems", DESIGN, AUTOMATION AND TEST IN EUROPE, EDA CONSORTIUM, 111 WEST SAINT JOHN STREET, SUITE 220 SAN JOSE CA 95113 USA, 18 mars 2013 (2013-03-18), pages 599-602, XP058018925, DOI: 10.7873/DATE.2013.131 ISBN: 978-1-4503-2153-2
- FEBIANSYAH HIDAYAT ET AL: "Hybrid RAM system's development APIs", 2013 INTERNATIONAL CONFERENCE ON ADVANCED COMPUTER SCIENCE AND INFORMATION SYSTEMS (ICACSIS), IEEE, 28 septembre 2013 (2013-09-28), pages 101-106, XP032578183, DOI: 10.1109/ICACSIS.2013.6761559 [extrait le 2014-03-07]
- LEE HYEJI ET AL: "Mitigating write interference on SSD in home cloud server", 2018 IEEE INTERNATIONAL CONFERENCE ON CONSUMER ELECTRONICS (ICCE), IEEE, 12 janvier 2018 (2018-01-12), pages 1-3, XP033341645, DOI: 10.1109/ICCE.2018.8326216 [extrait le 2018-03-26]

## Description

### DOMAINE TECHNIQUE GENERAL

La présente invention concerne un procédé d'écriture dans une mémoire flash non-volatile.

### ETAT DE LA TECHNIQUE

Un dispositif électronique tel qu'une carte SIM, eSIM (« *Embedded SIM »* ou eUICC), ou un élément sécurisé embarqué (« *Embedded Secure Element* » en anglais) utilise conventionnellement une mémoire « flash » non volatile dans laquelle sont, notamment, mémorisées des applications ainsi que des données utiles à ces applications.

Les mémoires de types « flash » sont partitionnées en plusieurs pages (ou secteurs), chaque page comprenant un nombre d'octets prédéfini. La page est l'unité de base d'écriture dans la mémoire flash (cela veut dire que les octets d'une page doivent être modifiés simultanément - on ne peut pas mettre à jour un seul octet d'une page sans affecter les autres octets de cette page, sauf si cet octet est « vide ». Donc normalement, il faut effacer la page, puis en réécrire toutes les données. Par contre, il est possible de modifier les octets « vides », sans affecter les autres octets de la page.

Au cours de son utilisation, une mémoire non volatile est soumise à de nombreux cycles d'effacements et d'écritures, ce qui crée une usure de la mémoire flash. Typiquement, une page mémoire peut supporter jusqu'à 100 000 cycles d'effacement / écriture.

Afin de limiter l'usure prématurée de la mémoire flash, des techniques dites de répartition de l'usure ou d'uniformisation de l'usure (« *wear leveling* » en anglais) ont été développées. Ces techniques visent à prolonger la durée de vie de la mémoire flash et sont habituellement implémentées au niveau du contrôleur de la mémoire flash.

Un problème est que pour des raisons de couts certains éléments sécurisés n'intègrent pas de mécanisme de « wear leveling », et ne gèrent donc pas l'usure.

Un autre problème est que ces mécanismes peuvent ralentir le fonctionnement de l'élément sécurisé.

On connaît par ailleurs de l'état de la technique un procédé au cours duquel un mécanisme de réduction d'usure d'une mémoire non volatile est utilisé ou non, selon les données à écrire dans cette mémoire non volatile. La décision d'utiliser ou non ce mécanisme de réduction d'usure est prise par un contrôleur matériel.

Un tel procédé présente toutefois l'inconvénient de ne pas pouvoir contrôler de manière fine la désactivation du mécanisme d'usure. En effet, un contrôleur matériel ne peut prendre la décision d'utiliser ou non un mécanisme d'usure qu'en fonction de la donnée elle-même concernée par un accès, ce qui constitue une information limitée. La politique de désactivation suivie par un tel contrôleur est donc très rigide. Un tel contrôleur ne connaît généralement pas le contexte dans lequel cette donnée est manipulée. Avec un tel procédé, il n'est donc pas possible de trouver un compromis idéal entre réduction d'usure et économie de ressources matérielles.

### PRESENTATION DE L'INVENTION

Un but de l'invention est de pouvoir ajuster, au sein d'un dispositif comprenant une mémoire non volatile, un compromis entre réduction d'usure de cette mémoire et performances du dispositif.

A cet effet il est proposé, selon un premier aspect de l'invention, un procédé d'obtention d'un programme destiné à être exécuté par un dispositif électronique, tel qu'une carte à puce, comprenant une mémoire non volatile, le procédé comprenant des étapes de
- insertion, dans un code source, d'une première fonction au début d'un bloc d'instructions de code source, et insertion d'une deuxième fonction à la fin du bloc d'instructions de code source,
- après les insertions, génération du programme exécutable à partir du code source, dans lequel
- la première fonction est configurée pour désactiver un mécanisme de réduction d'usure de la mémoire non volatile, lorsque le programme est exécuté par le dispositif électronique,
- la deuxième fonction est configurée pour réactiver le mécanisme de réduction d'usure de la mémoire non volatile, lorsque le programme est exécuté par le dispositif électronique.

En définitive, c'est au cours du développement du programme qu'est trouvé un compromis entre l'usure de la mémoire non volatile et les performances du programme. Ceci permet une gestion beaucoup plus souple de la gestion de la mémoire non volatile que des systèmes déterminant au niveau matériel et dynamiquement si une donnée doit être accédée en mémoire volatile en passant par le mécanisme de réduction d'usure ou pas. En effet, le matériel opérant une telle décision ne connaît généralement pas le contexte dans lequel cette donnée doit être accédée. Grâce au procédé selon le premier aspect de l'invention, il est proposé de déterminer dès le stade de conception du programme les sections de code qui bénéficieront du mécanisme de réduction d'usure, et les sections de code où il est acceptable de se permettre de désactiver temporairement ce mécanisme afin d'économiser des ressources matérielles. C'est de cette manière qu'il est possible de trouver un compromis idéal entre réduction d'usure et économie de ressources matérielles.

Le procédé selon le premier aspect de l'invention peut également comprendre les caractéristiques suivantes, prises seules ou en combinaison lorsque cela est techniquement possible.

De préférence, le programme comprend un bloc d'instructions de code cible générée à partir du bloc d'instruction de code source, et le bloc d'instructions de code source est déterminé en fonction d'une fréquence d'exécution potentielle du bloc d'instructions de code cible, au cours de l'exécution du programme par le dispositif électronique.

De préférence, le programme comprend un bloc d'instructions de code cible générée à partir du bloc d'instruction de code source, et le bloc d'instructions de code source est déterminé en fonction d'un nombre d'accès en lecture dans la mémoire non volatile, au cours d'une exécution du bloc d'instructions de code cible par le dispositif électronique.

De préférence, le programme comprend un bloc d'instructions de code cible générée à partir du bloc d'instruction de code source, le mécanisme de réduction d'usure utilise une mémoire tampon pour accéder à des données dans la mémoire non volatile, et le bloc d'instructions de code source est déterminé de telle sorte qu'une exécution du bloc d'instruction de code cible par le dispositif électronique n'entraîne pas de manipulation de données présentes dans la mémoire tampon.

De préférence, le programme comprend un bloc d'instructions de code cible générée à partir du bloc d'instruction de code source, et le bloc d'instructions de code source est déterminée en fonction d'une quantité de données susceptibles d'être écrites en dans la mémoire non volatile au cours d'une exécution du bloc d'instructions de code cible par le dispositif électronique.

De préférence, la quantité de données est supérieure ou égale à la taille de la mémoire tampon.

De préférence, le mécanisme de réduction d'usure utilise une mémoire tampon pour accéder à des données dans la mémoire non volatile, et la désactivation du mécanisme par la première fonction ou la réactivation du mécanisme par la deuxième fonction comprend un vidage de la mémoire tampon.

Il est également proposé, selon un deuxième aspect de l'invention, un produit programme d'ordinateur susceptible d'être obtenu par le procédé selon le premier aspect de l'invention.

Il est également proposé, selon un troisième aspect de l'invention, un dispositif électronique, tel qu'une carte à puce, comprenant une mémoire non volatile, un mécanisme de réduction d'usure de la mémoire non volatile, et au moins un processeur configuré pour exécuter le produit programme d'ordinateur selon la revendication précédente.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un élément sécurisé tel qu'une carte à puce ;
- la figure 2 illustre des partitions d'une mémoire volatile mise en oeuvre dans l'invention.
- les figures 3 et 4 illustrent des étapes de procédés selon l'invention ;

Sur l'ensemble des figures les éléments similaires portent des références identiques.

### DESCRIPTION DETAILLEE DE L'INVENTION

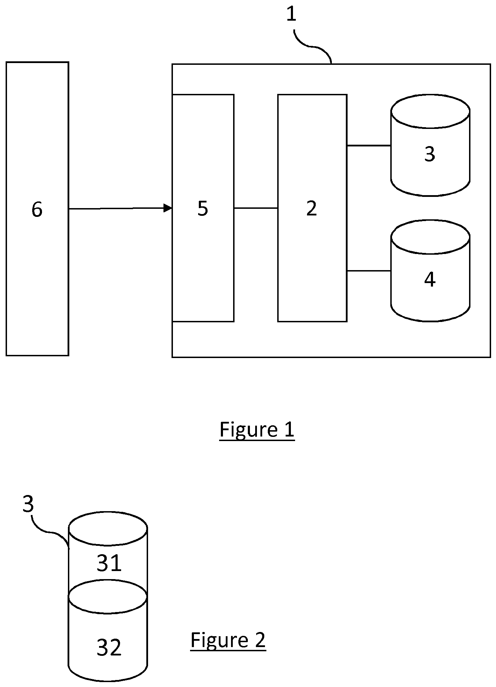

En référence à la **figure 1**, un dispositif électronique 1 comprend au moins un processeur 2, au moins une mémoire non volatile 3 et au moins une mémoire volatile 4.

La mémoire non volatile 3 mémorise de manière persistante des programmes et des données destinées à être manipulées par les programmes. Cette mémoire 3 est par exemple de type flash.

La mémoire non volatile 3 peut être interne ou externe.

La mémoire non volatile 3 comprend une pluralité de secteurs physiques. Chaque secteur physique a une adresse physique, et est susceptible d'héberger des données.

La mémoire non volatile 3 stocke notamment plusieurs programmes : un système d'exploitation, au moins une application susceptible d'être exécuté par le système d'exploitation.

Le processeur 2 est configuré pour exécuter l'un ou l'autre de ces programmes.

La mémoire non volatile 3 est également destinée à stocker des données manipulées par ces programmes. Ces données sont soit présentes dans la mémoire 3 avant la première mise en service du dispositif électronique, soit écrites dans la mémoire 3 par l'un ou l'autre de ces programmes après une telle mise en service.

En particulier, le système d'exploitation occupe une pluralité de secteurs physiques de la mémoire non volatile 3.

Par ailleurs, la mémoire volatile 4 a vocation à stocker des données de manière temporaire, jusqu'à une mise hors tension du dispositif électronique 1. La mémoire 4 est par exemple de type RAM (en anglais, « *Random Access Memory »).*

Le dispositif électronique 1 comprend également une interface de communication 5 avec un autre dispositif 6.

L'interface de communication 5 comprend par exemple au moins un contact électrique destiné à être mis en contact électrique avec un contact de l'autre dispositif 6, de sorte que des signaux électriques porteurs de données puissent être communiqués entre les deux dispositifs. En variante ou à titre complémentaire, l'interface de communication comprend une antenne radio, par exemple pour établir une communication du type « en champ proche » (en anglais « Near Field Communication », (NFC)).

Le dispositif électronique 1 est par exemple un élément sécurisé embarqué ou intégré (« *Embedded*/*Integrated Secure Element* » en anglais), (par exemple au format UICC).

Un procédé mis en œuvre par un programme stocké dans la mémoire non volatile au cours de son exécution comprend les étapes suivantes.

Dans un premier temps, un programme stocké dans la mémoire 3 non volatile est exécuté.

Au cours de l'exécution de ce programme, on accède à la mémoire non volatile selon un premier mode d'accès ou un deuxième mode d'accès.

Selon le premier mode d'accès il est en mis en oeuvre un mécanisme de réduction d'usure de la mémoire non volatile tandis que selon le deuxième mode d'accès ce mécanisme de réduction d'usure de la mémoire non volatile n'est pas mis en oeuvre.

Un tel mécanisme de réduction d'usure est du type à répartition ou uniformisation d'usure (en anglais, « *wear leveling* ») ou à tampon d'écriture (en anglais, « *write buffer* »). S'agissant du « wear leveling » on pourra se référer au document Mittal / Vetter, A Survey of Software Techniques for Using Non-Volatile Memories for Storage and Main Memory Systems, IEEE, 2015.

De tels mécanismes permettent de limiter l'usure de la mémoire non volatile mais sont consommateurs de ressources. A ce titre, un mécanisme de gestion de la mémoire met en oeuvre une ou plusieurs fonction(s) spécifique(s) utilisant des ressources spécifiques de l'élément sécurisé qui sont consommatrices de mémoire non volatile et de durée et ont un impact non négligeable sur les performances du programme.

Le mécanisme de réduction d'usure de la mémoire non volatile peut être temporairement désactivé au cours de l'exécution du programme par le processeur 2.

Comme on le verra par la suite, la désactivation du mécanisme de réduction d'usure de la mémoire non volatile dépend uniquement de l'endroit ou se trouve le pointeur d'exécution du processeur 2 dans le programme. En particulier, la mise en oeuvre du premier mode ou du second et donc l'arrêt ou la mise en pause du mécanisme de gestion de la mémoire s'effectue au cours de l'exécution du programme

Le choix d'arrêter le mécanisme de gestion de la mémoire ou de le mettre en pause est une question de compromis : l'arrêt nécessitant plus de ressources que la mise en pause c'est en fonction de l'objectif poursuivi par le programme que le choix est fait, ce choix étant laissé au développeur du programme. C'est donc manuellement que le choix est fait contrairement aux exécutions classiques selon lesquelles les mécanismes de gestion de mémoire sont exécutés automatiquement indépendamment d'une optimisation des ressources utilisées par le programme.

Selon le deuxième mode d'accès, les données sont manipulées sans mettre en oeuvre un quelconque mécanisme de réduction d'usure de la mémoire non volatile.

En particulier, les modifications (création d'objet ou mise à jour d'un objet) du contenu de la mémoire non volatile se font dans la mémoire volatile 4. Aussi lorsqu'une modification doit être effectuée, le contenu de la mémoire non volatile est intégralement copié dans la mémoire volatile, et les modifications sont effectuées sur cette copie dans la mémoire volatile.

Une fois les modifications effectuées en mémoire volatile, la mémoire non volatile est effacée et le contenu issu de la mémoire volatile est copié dans la mémoire non volatile.

C'est ce mécanisme de modifications qui « use » la mémoire non volatile et c'est pourquoi le mécanisme de réduction d'usure de la mémoire non volatile est mis en oeuvre au cours du premier mode d'accès.

Par ailleurs, toujours selon ce deuxième mode d'accès la lecture dans le contenu de la mémoire non volatile se fait directement dans la mémoire non volatile.

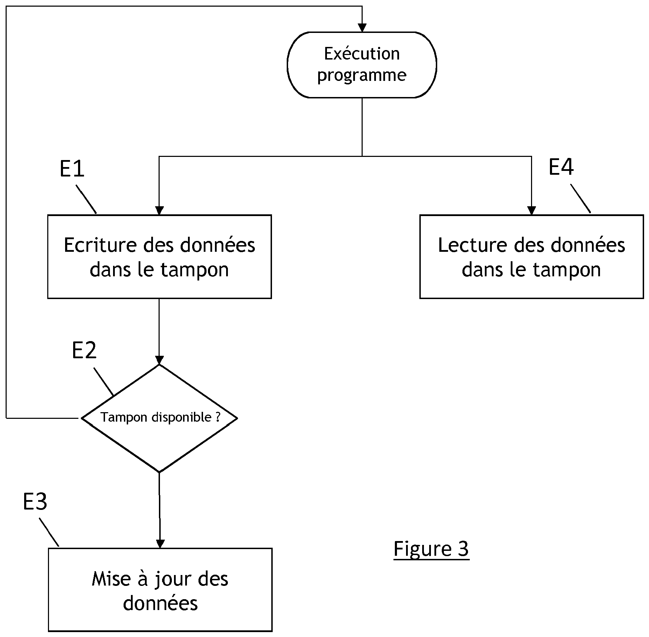

Selon un mode de réalisation avantageux, le premier mode d'accès comprend la mise en oeuvre d'un mécanisme réduction d'usure à tampon d'écriture décrit en relation avec la **figure 3****.**

A titre préliminaire, on considère qu'une première portion 31 de la mémoire 3 non volatile est réservée pour l'exécution du programme ainsi que pour le stockage du code du programmeur ainsi que des données (persistantes entre deux redémarrages) tandis qu'une seconde portion 32 de la mémoire 3 non volatile est allouée à un tampon d'écriture (voir la **figure 2**). En particulier, une petite portion de la mémoire volatile est réservée pour le tampon d'écriture. Le reste est utilisé pour stocker le code ainsi que les données.

En revenant à la figure 3, au cours de l'exécution du programme, lorsque des données doivent être écrites (crées ou mises à jour) ces dernières sont écrites (étape E1) les unes à la suite des autres dans le tampon d'écriture. Le remplissage (étape E2) du tampon est vérifié après chaque écriture dans le tampon de manière à qu'il puisse contenir des nouvelles données.

De préférence les données sont écrites dans le tampon au niveau d'octets « vides », ce qui évite de passer par des cycles d'effacement/écriture, et donc ne cause pas d'usure.

Lorsque le tampon est plein ou bien qu'il est détecté que sa capacité n'est plus suffisante pour contenir de nouvelles données alors (étape E3) il est procédé à une mise à jours des données dans la première portion 31 de la mémoire 3 non volatile (la portion allouée à l'exécution du programme).

Cette mise à jour (étape E3) est exécutée page par page. Elle comprend les étapes suivantes.

Le contenu de la page à mettre à jour est copié à partir de la première portion 31 de la mémoire 3 non volatile dans le contenu de la mémoire 4 volatile.

Le tampon d'écriture 32 est balayé afin de récupérer les données dans leur dernière version (modification ou création). Ces modifications sont consolidées vers le contenu copié en mémoire volatile.

Puis, le contenu de la mémoire volatile est copié dans la page de la première portion de la mémoire non volatile (après l'effacement de cette dernière).

Avantageusement, le tampon est remis à zéro, son contenu est effacé.

Ainsi, comme on l'aura compris, la procédure d'effacement / écriture dans la mémoire non volatile n'est effectuée que dans des cas où le tampon est plein ou bien en limite de capacité.

De manière complémentaire, lorsque des données doivent être lues (étape E4), alors que le mécanisme à tampon d'écriture est actif, il convient de consolider les données entre celles qui viennent d'être modifiées et/ou créées dans le tampon d'écriture 32 avec celles présentes dans la mémoire non volatile 31. Pour ce faire, là encore, le tampon est balayé afin de vérifier si la donnée lue est dans le tampon d'écriture ou dans la première portion de la mémoire non volatile uniquement.

Cela induit des effets notables sur les performances, surtout en cas d'accès fréquents.

Par contre, lorsque le mécanisme à tampon d'écriture est désactivé, la procédure de lecture de données avec consolidation décrite ci-dessus n'est pas exécutées. Les données sont lues directement à partir de la mémoire non volatile 31, permettant d'éviter la dégradation des performances.

La désactivation du mécanisme de réduction d'usure peut être un arrêt ou une mise en pause de ce mécanisme.

Lorsque le mécanisme de réduction d'usure utilise un tampon (tel que le tampon d'écriture 32), l'arrêt consiste à vider entièrement le tampon d'écriture 32 en mettant à jour toutes les pages modifiées dans la mémoire non volatile 31. Donc des arrêts fréquents du mécanisme à tampon d'écriture affectent la performance en provoquant des écritures, et induisent une usure de la mémoire non volatile.

Par contraste, une mise en pause du mécanisme à tampon d'écriture ne fait que désactiver la procédure de lecture de données avec consolidation. Donc, le contenu du tampon d'écriture est maintenu, et on évite les effets négatifs sur les performances.

Selon un deuxième mode de réalisation avantageux, le mécanisme de réduction d'usure de la mémoire non volatile met en oeuvre un compteur. En cas d'arrêt du mécanisme de gestion de la mémoire le compteur est mis à zéro alors qu'en cas de mise en pause le compteur est simplement interrompu. Là encore, la mise en pause à moins d'effet sur les performances que l'arrêt.

Comme indiqué précédemment, le caractère actif ou non actif du mécanisme de réduction d'usure dépend uniquement de la partie du programme en cours d'exécution, c'est-à-dire de la localisation du pointeur d'exécution du processeur 2 au cours de l'exécution du programme par ce processeur 2. C'est le programmeur du programme qui détermine à l'avance, lors du codage du programme, si telle ou telle instructions de code du programme doit bénéficier du mécanisme de réduction d'usure ou non.

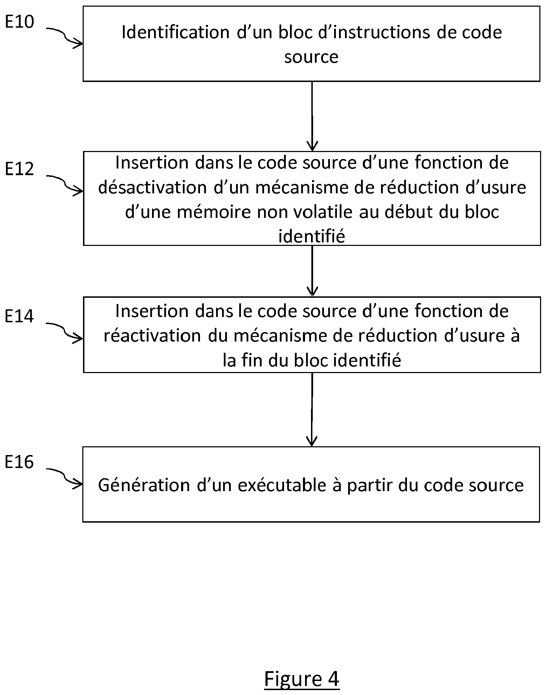

En référence à la **figure 4****,** le programme exécuté par le dispositif électronique 1 est obtenu par un procédé comprenant les étapes suivantes, sur la base d'un code source.

Le code source comprend une pluralité d'instructions de code source écrites dans un langage de programmation prédéterminé.

Un programmeur identifie dans le code source un bloc d'instructions de code source comprenant une ou plusieurs instructions (étape E10). Le bloc d'instructions de code source débute ainsi par une instruction initiale et se termine par une instruction finale.

Le programmeur identifie le bloc d'instructions de code source au cours de l'étape E10 en utilisant certains critères spécifiques qui seront discutés plus loin.

Le programmeur insère dans le code source une fonction de désactivation au début du bloc d'instructions de code source (étape E12). Autrement dit, le programmeur fait en sorte que la fonction de désactivation puisse être exécutée juste avant l'instruction initiale du bloc.

La fonction de désactivation est configurée pour désactiver le mécanisme de réduction d'usure de la mémoire non volatile décrit précédemment. Cette désactivation est soit une mise en pause soit un arrêt conforme à la description qui précède.

Typiquement, le programmeur insère au début du bloc d'instructions de code source identifié un appel à la fonction de désactivation. Dans ce cas, la fonction de désactivation faire partie du code source, ou bien faire partie d'une bibliothèque par exemple précompilée. Ceci permet de pouvoir factoriser le code source et réutiliser simplement la fonction de désactivation en plusieurs endroits du code source. En variante, les instructions de la fonction de désactivation sont directement écrites juste avant le bloc.

Le programmeur insère par ailleurs dans le code source une fonction de réactivation à la fin du bloc d'instructions de code source (étape E14). Autrement dit, le programmeur fait en sorte que la fonction de réactivation puisse être exécutée juste après l'instruction de code finale du bloc.

Par ailleurs, la fonction de réactivation est configurée pour réactiver le mécanisme de réduction d'usure de la mémoire non volatile.

Typiquement, le programmeur insère à la fin du bloc d'instructions de code source un appel à la fonction de réactivation. Dans ce cas, la fonction de désactivation faire partie du code source, ou bien faire partie d'une bibliothèque par exemple précompilée. Ceci permet de pouvoir factoriser le code source et réutiliser simplement la fonction de réactivation en plusieurs endroits du code source. En variante, les instructions de la fonction de réactivation sont directement écrites juste avant le bloc.

Les insertions des fonctions de désactivation et de réactivation étapes E12 et E14) peuvent être bien entendues mises en œuvre dans n'importe quel ordre.

Une fois ces insertions réalisées, le code source peut ainsi présenter la forme suivante :

```
       ...
       Disable WL(); // appel à la fonction de désactivation
       // début d'un bloc d'instructions de code source
       ...
       // fin du bloc d'instructions de code source
       Enable_WL(); // appel à la fonction de réactivation
       ...
```

Les étapes d'identification E10 et d'insertion E12, 14 sont répétées par exemple pour plusieurs blocs d'instructions de code sources différentes du code source.

Le programmeur a la possibilité de faire un choix entre les deux modes de désactivation du mécanisme de réduction d'usure décrits précédemment (arrêt ou mise en pause).

Par exemple, une fonction générique Disable_WL() peut prendre en paramètre une valeur permettant de sélectionner l'un ou l'autre de ces modes de désactivation du mécanisme de réduction d'usure de mémoire non volatile.

En variante, le programme a à sa disposition non pas deux fonctions génériques mais quatre fonctions. Pour une mise en pause, le programmeur peut entourer un bloc par une fonction de mise en pause Pause_WL() et une fonction de sortie de pause Resume_WL(). Pour un arrêt, le programmeur peut entourer un tel bloc par une fonction d'arrêt Stop_WL() et une fonction de redémarrage Start_WL().

Une fois que l'écriture du code source est terminée, le programme destiné à être exécuté par le dispositif électronique 1 est généré à partir du code source enrichi avec les appels aux fonctions de désactivation/réactivation (étape E16).

L'étape de génération E16 peut par exemple comprendre une compilation du code source. Une telle compilation convertit des instructions de code sources en instructions de code cible, interprétables par le processeur 2 du dispositif électronique 1.

Ainsi, au cours de la génération E16 du programme exécutable,
- un appel à la fonction de désactivation dans le code source est converti en un premier bloc d'instructions de code cible,
- un appel à la fonction de réactivation dans le code source est converti en un deuxième bloc d'instructions de code cible,
- le bloc d'instructions de code source entouré par ces deux appels est lui-même converti en un troisième bloc d'instructions de code cible.

Au cours d'une exécution du programme par le processeur 2, seront exécutés, dans cet ordre : le premier, puis le troisième puis le deuxième bloc d'instructions de code cible. Lorsque le point d'exécution du processeur 2 atteint un appel à la fonction de désactivation, celle-ci est exécutée par le processeur 2, si bien que le mécanisme de réduction d'usure décrit précédemment est désactivé. Le bloc se trouvant entre cet appel à la fonction de désactivation et un appel ultérieur à la fonction de réactivation sont ensuite exécutées par le processeur 2 sans que le mécanisme de réduction d'usure ne soit utilisé. Certes, cette non-utilisation de ce mécanisme use davantage la mémoire non volatile. Toutefois, elle permet d'alléger la consommation de ressources par le programme. Par la suite, le point d'exécution du processeur 2 atteint un appel à la fonction de réactivation, qui est donc exécutée par le processeur 2. Le mécanisme de réduction d'usure décrit précédemment est alors réactivé.

En définitive, c'est au cours du développement du programme qu'est trouvé un compromis entre l'usure de la mémoire non volatile et les performances du programme. Ceci permet une gestion beaucoup plus souple de la gestion de la mémoire non volatile que des systèmes déterminant au niveau matériel et dynamiquement si une donnée doit être accédée en mémoire volatile en passant par le mécanisme de réduction d'usure ou pas. En effet, le matériel opérant une telle décision ne connaît généralement pas le contexte dans lequel cette donnée doit être accédée. L'invention propose de déterminer dès le stade de conception du programme les sections de code qui bénéficieront du mécanisme de réduction d'usure, et les sections de code où il est acceptable de se permettre de désactiver temporairement ce mécanisme afin d'économiser des ressources matérielles. C'est de cette manière qu'il est possible de trouver un compromis idéal entre réduction d'usure et économie de ressources matérielles.

On a vu précédemment que le programmeur a le choix de désactiver le mécanisme de réduction d'usure par un arrêt ou par une mise en pause de ce mécanisme.

La fonction de mise en pause présente l'avantage d'être rapide d'exécution puisqu'elle n'induit aucun vidage d'un tampon. En contrepartie, il incombe au programmeur de veiller à ce que le bloc qui se trouve entre un appel à la fonction de mise en pause du mécanisme de réduction d'usure de la mémoire non volatile et un appel subséquent à la fonction de sortie de pause de ce mécanisme ne manipule pas de données présentes dans le tampon. Le programmeur va donc placer ces deux fonctions autour d'un bloc d'instructions adapté pour respecter cette condition de base. Si cette condition de base n'est pas vérifiée, l'exécution du programme peut être instable.

Un autre critère d'identification d'un bloc d'instructions de code source au que le programmeur peut utiliser est la fréquence d'exécution potentielle du bloc d'instructions de code cible correspondant après compilation, par le dispositif électronique.

Par exemple, lorsqu'un bloc d'instructions en question est exécuté fréquemment, il peut être avantageux de l'entourer par les fonctions de pause et de sortie de pause, de sorte à augmenter l'économie de ressources matérielles induites par la mise en pause temporaire du mécanisme de réduction d'usure.

Pour déterminer avant exécution du programme par le processeur 2 une telle fréquence d'accès potentielle, le programmeur peut utiliser des outils de profilage connus de l'homme du métier.

Encore un autre critère d'identification de bloc d'instructions de code source utilisable est le nombre d'accès en lecture qui se produira dans la mémoire non volatile, au cours d'une exécution du bloc d'instructions de code cible correspondant au bloc d'instructions de code source par le dispositif électronique.

Par ailleurs, la fonction d'arrêt présente l'avantage pour le programmeur d'être insérable n'importe où dans le code source. Comme la fonction de désactivation vide le tampon, il n'est pas du tout besoin de veiller à ce que le bloc d'instruction qui suit un appel à la fonction d'arrêt s'abstienne de modifier le contenu de ce tampon. Autrement dit, le programmeur peut entourer sans contrainte n'importe quel bloc d'instructions de code source par les fonctions d'arrêt et de redémarrage, sans risque ultérieur d'instabilité. En contrepartie, l'exécution de la fonction d'arrêt prend plus de temps que l'exécution de la fonction de mise en pause, puisque le tampon doit être vidé.

Bien que le programmeur soit libre de choisir le bloc d'instructions de code source à entourer par les fonctions d'arrêt et de redémarrage, il est préférable de prendre en considération la quantité de données susceptibles d'être écrites en dans la mémoire non volatile au cours d'une exécution du bloc d'instructions de code cible correspondant par le dispositif électronique.

Utiliser aux fonctions d'arrêt et de redémarrage est particulièrement avantageux pour entourer un bloc qui écrit in *fine* une telle quantité de données qui est supérieure ou égale à la taille du tampon. En effet, dans un tel cas où le tampon est saturé, le mécanisme de réduction d'usure utilisant ce tampon devient moins efficace ; la consommation de ressources matérielles additionnelles induite par l'utilisation de ce mécanisme devient alors un investissement peu rentable. Autant alors désactiver temporairement ce mécanisme pour gagner par ailleurs en ressources matérielles.

## Revendications

1. Procédé d'obtention d'un programme destiné à être exécuté par un dispositif électronique (1), tel qu'une carte à puce, comprenant une mémoire non volatile, le procédé comprenant des étapes de
- insertion (E12), dans un code source, d'une première fonction au début d'un bloc d'instructions de code source, et insertion (E14) d'une deuxième fonction à la fin du bloc d'instructions de code source,
- après les insertions, génération (E16) du programme exécutable à partir du code source,
dans lequel
- la première fonction est configurée pour désactiver un mécanisme de réduction d'usure de la mémoire non volatile, lorsque le programme est exécuté par le dispositif électronique,
- la deuxième fonction est configurée pour réactiver le mécanisme de réduction d'usure de la mémoire non volatile, lorsque le programme est exécuté par le dispositif électronique.

2. Procédé selon la revendication précédente, dans lequel le programme comprend un bloc d'instructions de code cible générée à partir du bloc d'instruction de code source, et dans lequel le bloc d'instructions de code source est déterminé en fonction d'une fréquence d'exécution potentielle du bloc d'instructions de code cible, au cours de l'exécution du programme par le dispositif électronique.

3. Procédé selon l'une des revendications précédentes, dans lequel le programme comprend un bloc d'instructions de code cible généré à partir du bloc d'instruction de code source, et dans lequel le bloc d'instructions de code source est déterminé en fonction d'un nombre d'accès en lecture dans la mémoire non volatile, au cours d'une exécution du bloc d'instructions de code cible par le dispositif électronique.

4. Procédé selon l'une des revendications précédentes, dans lequel le programme comprend un bloc d'instructions de code cible générée à partir du bloc d'instruction de code source, et dans lequel le bloc d'instructions de code source est déterminée en fonction d'une quantité de données susceptibles d'être écrites en dans la mémoire non volatile au cours d'une exécution du bloc d'instructions de code cible par le dispositif électronique.

5. Produit programme d'ordinateur comprenant des instructions qui, lorsque le programme est exécuté par un ordinateur, conduisent celui-ci à mettre en œuvre le procédé selon l'une des revendications précédentes.

6. Dispositif électronique (1), tel qu'une carte à puce, comprenant une mémoire non volatile (3), un mécanisme de réduction d'usure de la mémoire non volatile, et au moins un processeur (4) configuré pour exécuter le produit programme d'ordinateur selon la revendication précédente.

## Patentansprüche

1. Verfahren zum Erhalten eines Programms, das dazu bestimmt ist, von einer elektronischen Vorrichtung (1), wie einer Chipkarte, ausgeführt zu werden, umfassend einen nichtflüchtigen Speicher, wobei das Verfahren die Schritte umfasst zum
- Einfügen (E12), in einen Quellcode, einer ersten Funktion am Anfang eines Blocks von Quellcodeanweisungen, und Einfügen (E14) einer zweiten Funktion am Ende des Blocks von Quellcodeanweisungen,
- nach den Einfügungen, Generieren (E16) des ausführbaren Programms ausgehend von dem Quellcode,
wobei
- die erste Funktion konfiguriert ist, um einen Mechanismus zur Verringerung des Verschleißes des nichtflüchtigen Speichers zu deaktivieren, wenn das Programm durch die elektronische Vorrichtung ausgeführt wird,
- die zweite Funktion konfiguriert ist, um den Mechanismus zur Verringerung des Verschleißes des nichtflüchtigen Speichers zu reaktivieren, wenn das Programm durch die elektronische Vorrichtung ausgeführt wird.

2. Verfahren nach dem vorstehenden Anspruch, wobei das Programm einen Block von Zielcodeanweisungen umfasst, der ausgehend von dem Block von Quellcodeanweisungen generiert wird, und wobei der Block von Quellcodeanweisungen in Abhängigkeit von einer potenziellen Ausführungsfrequenz des Blocks von Zielcodeanweisungen während der Ausführung des Programms durch die elektronische Vorrichtung bestimmt wird.

3. Verfahren nach einem der vorstehenden Ansprüche, wobei das Programm einen Block von Zielcodeanweisungen umfasst, der ausgehend von dem Block von Quellcodeanweisungen generiert wird, und wobei der Block von Quellcodeanweisungen in Abhängigkeit von einer Anzahl von Lesezugriffen auf den nichtflüchtigen Speicher während einer Ausführung des Blocks von Zielcodeanweisungen durch die elektronische Vorrichtung bestimmt wird.

4. Verfahren nach einem der vorstehenden Ansprüche, wobei das Programm einen Block von Zielcodeanweisungen umfasst, der ausgehend von dem Block von Quellcodeanweisungen generiert wird, und wobei der Block von Quellcodeanweisungen in Abhängigkeit von einer Menge von Daten bestimmt wird, die während einer Ausführung des Blocks von Zielcodeanweisungen wahrscheinlich durch die elektronische Vorrichtung in den nichtflüchtigen Speicher geschrieben werden.

5. Computerprogrammprodukt, das Anweisungen umfasst, die, wenn das Programm von einem Computer ausgeführt wird, diesen dazu veranlassen, das Verfahren nach einem der vorstehenden Ansprüche zu implementieren.

6. Elektronische Vorrichtung (1), wie eine Chipkarte, umfassend einen nichtflüchtigen Speicher (3), einen Mechanismus zur Verringerung des Verschleißes des nichtflüchtigen Speichers und mindestens einen Prozessor (4), konfiguriert, um das Computerprogrammprodukt nach dem vorstehenden Anspruch auszuführen.

## Claims

1. A method for obtaining a program intended to be executed by an electronic device (1), such as a smart card, comprising a non-volatile memory, the method comprising steps of
- inserting (E12), into a source code, a first function at the start of a block of source code instructions, and inserting (E14) a second function at the end of the block of source code instructions,
- after the insertions, generating (E16) the executable program from the source code,
wherein
- the first function is configured to deactivate a wear reduction mechanism of the non-volatile memory, when the program is executed by the electronic device,
- the second function is configured to reactivate the wear reduction mechanism of the non-volatile memory, when the program is executed by the electronic device.

2. A method according to the preceding claim, wherein the program comprises a block of target code instructions generated from the block of source code instructions, and wherein the block of source code instructions is determined based on a potential execution frequency of the block of target code instructions, during the execution of the program by the electronic device.

3. A method according to one of the preceding claims, where in the program comprises a block of target code instructions generated from the block of source code instructions, and wherein the block of source code instructions is determined based on a read access number in the non-volatile memory, during an execution of the block of target code instructions by the electronic device.

4. A method according to one of the preceding claims, wherein the program comprises a block of target code instructions generated from the block of source code instructions, and wherein the block of source code instructions is determined based on a quantity of data likely to be written in the non-volatile memory during an execution of the block of target code instructions by the electronic device.

5. A computer program product comprising instructions which, when the program is executed by a computer, lead the latter to implement the method according to one of the preceding claims.

6. An electronic device (1), such as a smart card, comprising a non-volatile memory (3), a wear reduction mechanism of the non-volatile memory, and at least one processor (4) configured to execute the computer program product according to the preceding claim.
